# EUROPÄISCHE PATENTSCHRIFT

(11) **EP 3 191 318 B1**
(45) Veröffentlichungstag und Bekanntmachung des Hinweises auf die Patenterteilung: **06.03.2019**
(21) Anmeldenummer: 15759779.0
(22) Anmeldetag: 04.09.2015
(51) Int. Cl.: B60C 23/00, B60K 25/08

(54) **MECHANISCH ANGETRIEBENE REIFENDRUCKREGULIERUNGSVORRICHTUNG FÜR NUTZFAHRZEUGANHÄNGER**
MECHANICALLY DRIVEN TYRE PRESSURE CONTROLLING DEVICE FOR A COMMERCIAL VEHICLE TRAILER
DISPOSITIF DE RÉGULATION DE LA PRESSION D'UN PNEUMATIQUE, ENTRAÎNÉ MÉCANIQUEMENT, POUR REMORQUE DE VÉHICULE UTILITAIRE

(30) Priorität: 10.09.2014 DE 102014113064
(43) Veröffentlichungstag der Anmeldung: 19.07.2017
(73) Patentinhaber: KNORR-BREMSE Systeme für Nutzfahrzeuge GmbH, 80809 München (DE)
(72) Erfinder: KANTOR, Kornél, H-6000 Kecskemét (HU); TOTH, Janos, H-6000 Kecskemét (HU); TOTH, Tamas, H-6000 Kecskemet (HU); VOITH, András, H-1183 Budapest (HU)
(86) Internationale Anmeldenummer: PCT/EP2015/070230
(87) Internationale Veröffentlichungsnummer: WO 2016/037936

(56) Entgegenhaltungen:
- WO-A1-93/07014
- WO-A1-2014/051677
- DE-C- 474 773
- GB-A- 667 269
- US-B2- 8 528 611

## Beschreibung

Die Erfindung betrifft eine Reifendruckregulierungsvorrichtung für einen druckluftbeaufschlagten Reifen eines Fahrzeugrades, umfassend eine Regelventileinrichtung zum Befüllen und/oder Entlüften des Reifens mit Druckluft, die von einer Verdichtereinrichtung zur Erzeugung des Reifenfülldrucks gespeist ist. Weiterhin betrifft die Erfindung auch ein Verfahren zum Befüllen eines druckluftbeaufschlagten Reifen sowie einen Nutzfahrzeuganhänger, der mit der Reifendruckregulierungsvorrichtung ausgestattet ist.

Das Einsatzgebiet der Erfindung erstreckt sich vornehmlich auf die Nutzfahrzeugtechnik. Für eine meist pneumatische Bremsanlage eines Nutzfahrzeuges ist bereits ein Druckluftsystem vorhanden, das meist über einen bordeigenen Verdichter gespeist wird, welcher gewöhnlich über die Verbrennungskraftmaschine des Nutzfahrzeuges angetrieben wird. Die hierdurch erzeugte Druckluft steht meist nicht allein nur der pneumatischen Bremsanlage zur Verfügung; es kann daneben beispielsweise auch eine pneumatische Federungsvorrichtung für die Fahrzeugräder und eine im Rahmen der vorliegenden Erfindung interessierende Reifendruckregulierungsvorrichtung gespeist werden.

Das Systemdruckniveau des Fahrzeugdruckluftsystems ist gemäß geltender Vorschriften auf maximal 8,5 Bar limitiert. Je nach Beladung des Fahrzeugs erfolgt ein lastabhängiges Befüllen der Reifen durch die Reifendruckregulierungsvorrichtung . Bei geringer Fahrzeugbeladung wird hierdurch ein geringerer Reifendruck eingestellt als bei höherer Fahrzeugbeladung. Da zu diesem lastabhängigen Befüllen der Reifen mit Druckluft auch Druckniveaus oberhalb des maximalen Systemdruckniveaus von 8,5 Bar erforderlich sind, nämlich - je nach Reifenbauart - bis hin zu 9,5 Bar, reicht das Systemdruckniveau nicht zum Betrieb der Reifendruckregulierungsvorrichtung aus.

Aus der WO 01/70521 A1 geht eine Reifendruckregulierungsvorrichtung mit zusätzlicher Boostereinrichtung hervor. Die Boostereinrichtung ist als eine spezielle Druckverstärkerpumpe mit einem Einlass und einem Auslass zum Verstärken des Luftdrucks von der Luftversorgung zu dem Reifen ausgeführt. Dabei ist der Einlass mit der Systemdruckversorgung des Fahrzeugs und der Auslass mit dem Reifen verbunden. Die Druckverstärkerpumpe ist als eine alternierende Kolbendruckpumpe ausgeführt und erhöht den Luftdruck um das gewünschte Maß über dem Systemdruck. Bauartbedingt erzeugt diese Druckverstärkerpumpe einen hohen Druckluftverlust von in etwa der Hälfte der eingangsseitig zugeführten Systemdruckluft. Dies führt zu einem hohen Energieverbrauch.

Die US 8,528,611 B2 offenbart eine andere Lösung für eine Reifendruckregulierungsvorrichtung mit zusätzlicher Verdichtereinrichtung zur Erzeugung eines das Systemdruckniveau übersteigenden Hochdruckniveaus zum Befüllen der Reifen. Hierbei wird die Verdichtereinrichtung allerdings nicht vom Systemdruck gespeist, sondern entnimmt die zu komprimierende Luft der Atmosphäre. Im Prinzip wird hier lediglich ein separater Zusatzkompressor verwendet, welcher wegen des auch zusätzlich erforderlichen Antriebs im Vergleich zu einer vorstehend als Stand der Technik beschriebenen Boostereinrichtung einen erhöhten gerätetechnischen Aufwand verursacht.

Die WO 2014/0516771 A1 offenbart eine Reifendruckregulierungsvorrichtung, welche gemeinsam mit einem Verdichter und einem Druckregelventil direkt im Fahrzeugrad integriert ist. Die vom Verdichter erzeugte Druckluft wird unmittelbar als Reifenluft zur Verfügung gestellt.

Die WO 93/07014 offenbart eine andere technische Lösung für eine Reifendruckregulierungsvorrichtung, bei welcher im Bereich des Fahrzeugrades eine Minidruckluftpumpe angeordnet ist, welche über ein integriertes Minigetriebe von der Drehbewegung des Fahrzeugrades angetrieben ist. Die Druckregelung erfolgt durch ein an der Radfelge angebrachtes Regelventil. Es handelt sich hierbei um eine rein mechanische Lösung.

Es ist daher die Aufgabe der vorliegenden Erfindung, eine Reifendruckregulierungsvorrichtung der gattungsgemäßen Art dahingehend weiter zu verbessern, dass mit minimalem gerätetechnischen Aufwand eine bedarfsgerecht energiesparende Druckluftversorgung zum Befüllen von Reifen auf einem das Systemdruckniveau übersteigenden Hochdruckniveau ermöglicht wird.

Die Aufgabe wird ausgehend von einer Reifendruckregulierungsvorrichtung gemäß dem Oberbegriff von Anspruch 1 in Verbindung mit dessen kennzeichnenden Merkmalen gelöst. Verfahrenstechnisch wird die Aufgabe durch Anspruch 6 gelöst. Bezüglich eines die Reifendruckregulierungsvorrichtung umfassenden Nutzfahrzeuganhängers wird auf Anspruch 8 verwiesen. Die jeweils nachfolgenden abhängigen Ansprüche geben vorteilhafte Weiterbildungen der Erfindung wieder.

Die Erfindung schließt die technische Lehre ein, dass die Verdichtereinrichtung zur Erzeugung des Reifenfülldrucks durch die mechanische Drehbewegung des Fahrzeugrades angetrieben ist, indem eine dazwischen angeordnete Getriebeinrichtung die rotierende Antriebsbewegung des Fahrzeugrades zur Antriebswelle der Verdichtereinrichtung überträgt.

Der Vorteil der erfindungsgemäßen Lösung liegt insbesondere darin, dass die bei Bewegung des Fahrzeuges ohnehin vorhandene Rotationsbewegung des Fahrzeugrades genutzt wird, indem diese über die Getriebeeinrichtung abgezweigt wird, um die Verdichtereinrichtung zu betreiben. Hierdurch ist die Reifendruckregulierungsvorrichtung unabhängig vom Systemdruck pₛ und kann auch - je nach Leistungsauslegung der Verdichtereinrichtung - mit einem höheren Druckniveau bereitgestellt werden, so dass der maximal erreichbare Reifenfülldruck pᵣ größer als der Systemdruck pₛ sein kann, welcher dann erstrangig zum Betrieb einer pneumatischen Bremsvorrichtung und/oder Federvorrichtung genutzt werden kann.

Die Getriebeeinrichtung zur Übertragung der mechanischen Drehbewegung des Fahrzeugrades an die Antriebswelle der Verdichtereinrichtung kann beispielsweise als ein Zahnradgetriebe ausgebildet werden. Diese Ausführungsform bietet sich dann an, wenn die Getriebeeinrichtung ortsnah zum Fahrzeugrad platziert werden kann. Ist dies nicht der Fall und insoweit ein höherer Leistungsübertragungsweg zu überbrücken, so wird vorgeschlagen, die Getriebeeinrichtung als Ketten- oder Riemengetriebe auszubilden. Sollte eine Unterbringung des sich bewegenden Zugmittels am Verbauungsort der Reifendruckregulierungsvorrichtung hinderlich sein, so wird alternativ hierzu vorgeschlagen, die Getriebeeinrichtung als eine Hydropumpen-Hydromotor-Anordnung auszubilden. In diesem Falle erfolgt die fluidische Leistungsübertragung über Druckmittelleitungen, welche fest verlegt im Bereich des Fahrzeugs untergebracht werden können. Der Hydropumpenteil dieser Getriebeeinrichtung ist dann ortsnah am Fahrzeugrad zu platzieren und der Hydromotorteil ist vorzugsweise direkt auf der Antriebswelle der Getriebeeinrichtung zu montieren. Ferner ist es auch denkbar, die Getriebeeinrichtung als eine elektrische Generator-Motor-Anordnung auszubilden. Zur Leistungsübertragung ist in diesem Fall eine elektrische Leitung im Bereich des Fahrzeuges zu verlegen. Der Generatorteil dieser Getriebeeinrichtung wäre im Bereich des Fahrzeugrades zu platzieren, wogegen der Motorteil an der Antriebswelle der Getriebeeinrichtung angebracht sein kann. In all den Fällen stellt die Getriebeeinrichtung sicher, dass eine unabhängig vom Systemdrucknetz oder Bordspannungsnetz des Fahrzeuges betreibbare Reifendruckregulierungsvorrichtung realisierbar ist, welche in einfacher Weise über die Bewegung des Fahrzeugrades bedarfsgesteuert antreibbar ist.

Gemäß der Erfindung ist luftaustrittsseitig der Verdichtereinrichtung eine Lufttrocknereinheit anzuschließen. Diese sorgt für eine Trocknung der von der Verdichtereinrichtung aus der Atmosphäre angesaugten Luft, ehe hiermit ein Befüllen des angeschlossenen Reifens erfolgt. Die insoweit getrocknete Druckluft minimiert die Korrosion innerhalb der Reifendruckregulierungsvorrichtung im Vergleich zu ungetrockneter Druckluft. Die Ansaugung von Luft aus der Atmosphäre erfolgt vorzugsweise über einen lufteintrittsseitig der Verdichtereinheit angeordneten Luftfilter.

Um die Reifendruckregulierungsvorrichtung nur bei Bedarf in Betrieb zu nehmen, ist erfindungsgemäß zwischen der Getriebeeinrichtung und dem diese antreibenden Fahrzeugrad eine Kupplungseinrichtung anzuordnen. Die Betätigung der Kupplungseinrichtung erfolgt vorzugsweise vom Druckluftbedarf des Reifens. Dies bedeutet, dass die Kupplung zwischen dem Fahrzeugrad und der Getriebeeinrichtung dann eingeschaltet wird, wenn der Reifenfülldruck pᵣ unter eine definierte Mindestgrenze fällt. Dagegen trennt die Kupplungseinrichtung dann, wenn der Reifenfülldruck pᵣ eine festgelegten Maximalwert von beispielsweise 9,5bar erreicht hat. Diese technische Lösung bietet eine einfache und robuste bedarfsgerechte Ansteuerung der Reifenbefüllung. Alternativ hierzu ist erfindungsgemäß die Kupplungseinrichtung über ein elektrisches Steuersignal anzusteuern, um diese bei Bedarf in Betrieb zu nehmen. Zusätzlich kann der Betriebszustand der Getriebeeinrichtung über eine geeignete Sensorik, beispielsweise einen Drehzahlmesser, überwacht werden, um zu ermitteln, ob mechanische Antriebsenergie in Folge einer Fahrzeugbewegung vorliegt oder nicht. Diese Information kann von einer übergeordneten Steuerung für die elektrische Ansteuerung der Reifendruckregulierungsvorrichtung nutzbar gemacht werden. Denn bei der erfindungsgemäßen Lösung ist eine Bewegung des Fahrzeuges Voraussetzung dafür, dass die Reifendruckregulierungsvorrichtung - vorzugsweise über Schließen der Kupplungseinrichtung - in Betrieb genommen werden kann.
Bevorzugt wird die erfindungsgemäße Lösung bei einem Nutzfahrzeuganhänger eingesetzt und arbeitet dort unabhängig von dem über die Koppelstelle zugeführten Systemdruck pₛ. Über die Koppelstelle des Nutzfahrzeuganhängers kann dagegen eine pneumatische Anhängerbremsvorrichtung mit dem Systemdruck pₛ versorgt werden. Es ist auch denkbar, dass über diesen zentralen Druckanschluss eine pneumatische Federungsvorrichtung mit betrieben wird, um im Nutzfahrzeuganhänger pneumatische Zusatzfunktionen auszuführen.

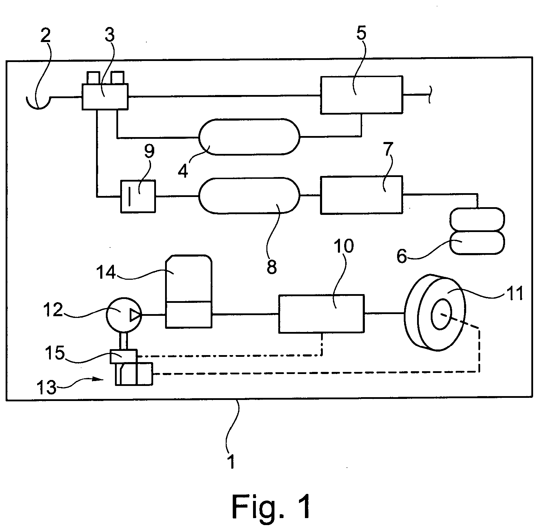

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Darstellung einer in einem Nutzfahrzeuganhänger untergebrachten Reifendruckregulierungsvorrichtung , Anhängerbremsvorrichtung sowie Federvorrichtung.

Gemäß Figur ist innerhalb eines nur schematisch dargestellten Nutzfahrzeuganhängers 1 ein pneumatisches System angeordnet, das über eine eingangsseitige Koppelstelle 2 an einem pneumatischen System eines - nicht weiter dargestellten - Triebfahrzeuges angeschlossen ist, dessen drucklufterzeugender Kompressor das pneumatische System des Nutzfahrzeuganhängers 1 mit einem Systemdruck pₛ von maximal 8,5 Bar versorgt. Über ein Verteilerventil 3 wird mit dem Systemdruck pₛ in erster Linie eine pneumatische Anhängerbremsvorrichtung versorgt, welche einen Vorratsdruckspeicher 4 zur Bevorratung von Druckluft zur Ausführung von Bremsvorgängen sowie eine Bremsventileinrichtung 5 umfasst, über welche - nicht weiter dargestellte - Bremsmittel pneumatisch angesteuert werden.

An der Koppelstelle 2 ist neben der pneumatischen Anhängerbremsvorrichtung bei diesem Ausführungsbeispiel auch eine pneumatische Federungsvorrichtung angeschlossen, die eine - exemplarisch dargestellte - Luftfederbalgeinheit 6 zur Federung einer Fahrzeugachse umfasst, die durch eine Federniveauventileinheit 7 angesteuert wird, welche von einem Vorratsdruckspeicher 8 mit Druckluft gespeist wird. Der Vorratsdruckspeicher 8 ist hier über ein vorgeschaltetes Druckbegrenzungsventil 9 am Systemdruck pₛ angeschlossen.

Unabhängig davon ist im Nutzfahrzeuganhänger 1 auch eine Reifendruckregulierungsvorrichtung integriert, die eine Regelventileinrichtung 10 zum lastabhängigen Befüllen des Reifens 11 mit Druckluft umfasst. Die Druckluft wird von einer autaken Verdichtereinrichtung 12 eingangsseitig der Regelventileinrichtung 10 zur Verfügung gestellt. Die Verdichtereinrichtung 12 wird zum Kompromieren von aus der Atmosphäre angesaugter Luft durch die mechanische Drehbewegung des Fahrzeugrades angetrieben. Hierfür überträgt eine dazwischen angeordnete Getriebeeinrichtung 13 die rotierende Antriebsbewegung des Fahrzeugrades zur Antriebswelle der Verdichtereinrichtung 12.

In diesem Ausführungsbeispiel ist die Getriebeeinrichtung 13 als eine Hydropumpen-Hydromotor-Anordnung ausgebildet, bei welcher - nicht im Detail dargestellt - der Hydropumpenteil an der Welle des mit dem Reifen 11 ausgestatten Fahrzeugrades angebracht ist und der Hydromotorteil an der Antriebswelle der Verdichtereinrichtung 12. Die Übertragung erfolgt über eine Ölringleitung (Strichlinie).
An die Verdichtereinrichtung 12 ist luftaustrittsseitig eine Lufttrocknereinheit 14 angeschlossen, um die von der Verdichtereinrichtung 12 durch Ansaugung aus der Umgebungsluft erzeugte Druckluft hinreichend zu trocknen, ehe diese dem Speisedruckanschluss der Regelventileinrichtung 10 zur Verfügung gestellt wird, damit diese lastabhängig ein Befüllen des hieran arbeitsleitungsseitig angeschlossenen Reifens 11 mit Druckluft vornehmen kann.

Die Regelventileinrichtung 10 steuert elektrisch (Strichpunktlinie) eine Kupplungseinrichtung 15 an, welche auf der Antriebswelle der Verdichtereinheit 12 angeordnet ist, um je nach Bedarf ein Trennen oder Aufschalten des Antriebsleistungsflusses vornehmen zu können. Hierdurch wird ein bedarfsgerechter Betrieb der Verdichtereinrichtung 12 ermöglicht. Die Kupplungseinrichtung 15 ist bei diesem Ausführungsbeispiel als eine pneumatisch vorgesteuerte Lamellenkupplung ausgebildet.
Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, die Getriebeeinrichtung 13 nach einer anderen Bauart auszuführen, beispielsweise als Zahnradgetriebe.

### Bezugszeichenliste

- 1: Nutzfahrzeuganhänger
- 2: Koppelstelle
- 3: Verteilerventil
- 4: Vorratsdruckspeicher
- 5: Bremsventileinrichtung
- 6: Luftfederbalgeinheit
- 7: Fedemiveauventileinheit
- 8: Vorratsdruckspeicher
- 9: Druckregelventil
- 10: Regelventileinrichtung
- 11: Reifen
- 12: Verdichtereinrichtung
- 13: Getriebeeinrichtung
- 14: Lufttrocknereinheit
- 15: Kupplungseinrichtung

## Patentansprüche

1. Reifendruckregulierungsvorrichtung für einen druckluftbeaufschlagten Reifen (11) eines Fahrzeugrades, umfassend eine Regelventileinrichtung (10) zum geregelten Befüllen und/oder Entlüften des Reifens (11) mit Druckluft, die von einer Verdichtereinrichtung (12) zur Erzeugung des Reifenfülldrucks (pᵣ) gespeist ist, welche zum Komprimieren von aus der Atmosphäre angesaugter Luft durch die mechanische Drehbewegung des Fahrzeugrades angetrieben ist, indem eine dazwischen angeordnete Getriebeeinrichtung (13) die rotierende Antriebsbewegung vom Fahrzeugrad zur Antriebswelle der Verdichtereinrichtung (12) überträgt, wobei eine Lufttrocknereinheit (14) vorgesehen ist, und wobei die Regelventileinrichtung (10) elektrisch eine Kupplungseinrichtung ansteuert (15), um je nach Bedarf ein Trennen oder Aufschalten des Antriebsleistungsflusses vorzunehmen; **dadurch gekennzeichnet, dass** die Lufttrocknereinheit (14) luftaustrittsseitig der Verdichtereinrichtung (12) angeschlossen ist, und an einem Speisedruckanschluss der Regelventileinrichtung (10) angeschlossen ist, und dass die Kupplungseinrichtung (15) auf der Antriebswelle der Verdichtereinrichtung (12) angeordnet ist.

2. Reifendruckregulierungsvorrichtung nach Anspruch 1,
**dadurch gekennzeichnet, dass** die Getriebeeinrichtung (13) als ein Zahnradgetriebe, ein Ketten- oder Riemengetriebe, eine Hydropumpen-Hydromotor-Anordnung oder eine elektrische Generator-Motor-Anordnung ausgebildet ist.

3. Reifendruckregulierungsvorrichtung nach Anspruch 2,
**dadurch gekennzeichnet, dass** die Betätigung der Kupplungseinrichtung (15) vom Druckluftbedarf des Reifens (11) angesteuert ist.

4. Nutzfahrzeuganhänger (1), der via Koppelstelle (2) über ein Triebfahrzeug mit dem Systemdruck (pₛ) versorgt wird und eine hiervon unabhängig betriebene Reifendruckregulierungsvorrichtung nach einem der vorstehenden Ansprüche 1 bis 3 umfasst.

5. Nutzfahrzeuganhänger (1) nach Anspruch 4,
**dadurch gekennzeichnet, dass** an der Koppelstelle (2) eine pneumatische Anhängerbremsvorrichtung angeschlossen ist, umfassend einen Vorratsdruckspeicher (4) und eine Bremsventileinrichtung (5).

6. Nutzfahrzeuganhänger (1) nach Anspruch 4 oder 5,
**dadurch gekennzeichnet, dass** an der Koppelstelle (2) auch eine pneumatische Federungsvorrichtung angeschlossen ist, umfassend eine je einer Fahrzeugachse oder je einem Fahrzeugrad zugeordnete Luftfederbalgeinheit (6), eine diese beaufschlagende Fedemiveauventileinheit (7) und einen hieran angeschlossenen Vorratsdruckspeicher (8).

7. Nutzfahrzeuganhänger (1) nach einem der Ansprüche 4 bis 6,
**dadurch gekennzeichnet, dass** die Anhängerbremsvorrichtung und/oder die Federungsvorrichtung mit der Reifendruckregulierungsvorrichtung pneumatisch verbunden ist.

## Claims

1. Tyre pressure controlling device for a vehicle wheel tyre (11) charged with compressed air, comprising a control valve device (10) for controlled filling of the tyre (11) with compressed air and/or venting same therefrom, said compressed air being fed by a compressor device (12) for producing the tyre filling pressure (pᵣ), which compressor device for compressing air sucked up from the atmosphere is driven by the mechanical rotational movement of the vehicle wheel by a transmission device (13) arranged in-between transmitting the rotating driving movement from the vehicle wheel to the driveshaft of the compressor device (12), wherein an air dryer unit (14) is provided, and wherein the control valve device (10) electrically activates (15) a coupling device in order to perform a disconnection or connection of the driving power flux depending on need; **characterized in that** the air dryer unit (14) is connected on the air outlet side of the compressor device (12), and is connected to a feed pressure connection of the control valve device (10), and **in that** the coupling device (15) is arranged on the driveshaft of the compressor device (12).

2. Tyre pressure controlling device according to Claim 1, **characterized in that** the transmission device (13) is designed as a toothed transmission, a chain or belt transmission, a hydraulic pump and hydraulic motor arrangement or an electric generator and motor arrangement.

3. Tyre pressure controlling device according to Claim 2, **characterized in that** the actuation of the coupling device (15) is activated by the compressed air need of the tyre (11).

4. Commercial vehicle trailer (1) which is supplied with the system pressure (pₛ) by a traction vehicle via coupling point (2), and comprises a tyre pressure controlling device according to one of the preceding Claims 1 to 3 which is operated independently therefrom.

5. Commercial vehicle trailer (1) according to Claim 4, **characterized in that** a pneumatic trailer braking device comprising a storage pressure accumulator (4) and a brake valve device (5) is connected to the coupling point (2).

6. Commercial vehicle trailer (1) according to Claim 4 or 5, **characterized in that** a pneumatic suspension device comprising one pneumatic spring bellows unit (6) assigned to each vehicle axle or to each vehicle wheel, a spring level valve unit (7) acting upon said pneumatic spring bellows unit, and a supply pressure accumulator (8) connected to said spring level valve unit is also connected to the coupling point (2).

7. Commercial vehicle trailer (1) according to one of Claims 4 to 6, **characterized in that** the trailer braking device and/or the suspension device are/is pneumatically connected to the tyre pressure controlling device.

## Revendications

1. Système de régulation de la pression d'un pneumatique pour un pneumatique (11) alimenté en air comprimé d'une roue de véhicule, comprenant un dispositif (10) à valve de régulation pour emplir d'air comprimé le pneumatique (11) d'une manière réglée et/ou l'en vider, dispositif, qui est alimenté par un dispositif (12) de compresseur pour produire la pression (pᵣ) de remplissage du pneumatique, qui est entraîné pour comprimer de l'air aspiré de l'atmdsphère par le mouvement mécanique de rotation de la roue du véhicule, par le fait qu'un dispositif (13) de transmissions monté entre eux transmet le mouvement de rotation d'entraînement de la roue du véhicule à l'arbre d'entraînement du dispositif (12) de compresseur,
dans lequel il est prévu une unité (14) de sécheur d'air et dans lequel le dispositif (10) de valve de régulation commande électriquement un dispositif (15) de couplage pour, suivant les besoins, effectuer une séparation ou une application du flux de la puissance d'entraînement;
**caractérisé en ce que** l'unité (14) de sécheur d'air est raccordée du côté de la sortie de l'air du dispositif (12) de compresseur et est raccordée à un raccord de pression de l'alimentation du dispositif (10) de valve de régulation et **en ce que** le dispositif (15) de couplage est monté sur l'arbre d'entraînement du dispositif (12) de compresseur.

2. Système de régulation de la pression d'un pneumatique suivant la revendication 1,
**caractérisé en ce que** le dispositif (13) de transmission est constitué sous la forme d'une transmission à roue dentée, d'une transmission à chaîne ou à courroie, d'un agencement pompe hydraulique-moteur hydraulique ou d'un agencement génératrice électrique-moteur.

3. Système de régulation de la pression d'un pneumatique suivant la revendication 2,
**caractérisé en ce que** l'actionnement du dispositif (15) de couplage est commandé par le besoin en air comprimé du pneumatique (11).

4. Remorque (1) de véhicule utilitaire, qui est alimentée en la pression (pₛ) d'air par l'intermédiaire d'un point (2) de couplage par un véhicule moteur, et qui comprend un système de régulation de la pression d'un pneumatique fonctionnant indépendamment de cela suivant l'une des revendications précédentes 1 à 3.

5. Remorque (1) de véhicule utilitaire suivant la revendication 4,
**caractérisée en ce qu'**au point (2) de couplage est raccordé un système pneumatique de frein de remorque, comprenant un accumulateur (4) de pression de réserve et un dispositif (5) à soupape de freinage.

6. Remorque (1) de véhicule utilitaire suivant la revendication 4 ou 5,
**caractérisée en ce qu'**au point (2) de couplage est raccordé aussi un système pneumatique de suspension, comprenant une unité (6) de soufflet à ressort pneumatique associée, respectivement, à un essieu du véhicule ou à, respectivement, une roue du véhicule, une unité (7) de soupape de niveau de ressort et un accumulateur (8) de pression de réserve, qui y est raccordé.

7. Remorque (1) de véhicule utilitaire suivant 4 à 6,
**caractérisée en ce que** le système de frein de remorque et/ou le système de suspension sont reliés pneumatiquement au système de régulation de la pression d'un pneumatique.
